# EUROPEAN PATENT SPECIFICATION

(11) **EP 2 052 183 B1**
(45) Date of publication and mention of the grant of the patent: **14.06.2017**
(21) Application number: 07800084.1
(22) Date of filing: 10.08.2007
(51) Int. Cl.: A47J 36/30, C09K 5/18, F24J 1/00

(54) **OXYGEN ACTIVATED HEATER AND METHODS OF MANUFACTURING SAME**
SAUERSTOFFAKTIVIERTE HEIZVORRICHTUNG UND HERSTELLUNGSVERFAHREN DAFÜR
SYSTÈME DE CHAUFFAGE ACTIVÉ PAR L'OXYGÈNE ET MÉTHODES DE RÉALISATION DUDIT SYSTÈME

(30) Priority: 10.08.2006 US 837029 P
(43) Date of publication of application: 29.04.2009
(73) Proprietor: RECHARGEABLE BATTERY CORPORATION, College Station, TX 77840-1431 (US)
(72) Inventor: TINKER, Lawrence, A., College Station, TX 77840-1431 (US); KAINTHLA, Ramesh, C., College Station, TX 77845 (US); SESOCK, Charles, Edward, College Station, TX 77845 (US); PATEL, Bhavesh, College Station, Texas US 77845, (US)
(74) Representative: Schwanhäußer, Gernot
(86) International application number: PCT/US2007/075740
(87) International publication number: WO 2008/022044

(56) References cited:
- EP-A- 0 244 133
- EP-A1- 1 439 213
- EP-A1- 1 577 363
- WO-A1-2006/006661
- US-A- 4 268 272
- US-A- 5 180 759
- US-B1- 6 209 457
- US-B2- 6 886 553
- US-B2- 6 915 798

## Description

### RELATED APPLICATIONS

This application relies upon the priority of U.S. Provisional Application No. 60/837,029 filed on August 10, 2006.

### FIELD OF THE INVENTION

The present invention relates to portable flameless heaters that produce heat upon reaction with oxygen and methods of manufacturing and packaging same.

### BACKGROUND OF THE INVENTION

Portable flameless heaters are currently used in a variety of applications, for example heating comestible items. For example the United States Army uses a flameless ration heater (FRH) rather than a portable camp-stove to heat a pre-packaged MRE (meal ready to eat) eight-ounce (approximately 227 grams) field ration. The FRH consists of a super-corroding magnesium/iron mixture sealed in a waterproof pouch (total FRH weight is approximately 22 grams). To operate a FRH, the pouch is opened into which the MRE is inserted, and approximately 58 grams of water is added to a fuel-containing portion of the FRH pouch surrounding the MRE to initiate the following reaction:

Mg + 2H₂O → Mg(OH)₂ + H₂

Based upon the above reaction of the fuel, the MRE temperature is raised by approximately 37.8°C (100°F) in less than 10 minutes. The maximum temperature of the system is safely regulated to about 100°C (212°F) by evaporation and condensation of water vapor.

The current FRH, while effective for its intended purpose, produces hydrogen gas as a byproduct generating safety, transportation, storage and disposal concerns, and making it less suitable for use in consumer sector applications where accidental misuse could lead to fire or explosion.

Also, the water required for reaction, in addition to being heavy and spacious, is typically obtained from a soldier's drinking water supply, which is often limited. Addition of the water can also be an inconvenient additional step in the process of activating the FRH.

Self-heating food packaging products are also available in the consumer market. These products use the heat of hydration from mixing "quicklime" (calcium oxide) and water (CaO + H₂O → Ca(OH)₂) which does not generate hydrogen. With water present the peak temperature is similarly limited to 100°C (212°F) but even neglecting the weight of packaging and water, the specific energy of the system is low (approximately 1.2 kJ per gram of CaO). These and other self-contained systems must also provide some means of mixing the segregated reactants adding further complexity and bulk. Measurements on some commercial self-heating packaged food products are shown in Table 1.

**Table 1**

| | Food product (net) | | Total package (gross) | | Specific energy of heater (kJ/g) |
|---|---|---|---|---|---|
| | Weight (g) | Volume (ml) | Weight (g) | Volume (ml) | |
| Coffee | 300 | 295 | 551 | 600 | 0.34 |
| Beef stew | 425 | 481 | 883 | 963 | 0.13 |

While quicklime based heaters may offer greater safety than the Mg based heaters, quicklime heaters significantly lower specific energy and cause the weight and size of the heater to approach that of the object being heated, reducing portability.

In addition to the water-based heaters described above, it is known to utilize oxygen- based heaters. Oxygen-based heaters, such as those described in U.S. Pat. Nos. 5,984,995, 5,918,590 and 4,205,957, have certain benefits over water-based heaters.

First, oxygen-based heaters do not require the addition of water to generate heat. Second, because the oxygen-based heater generates heat only in the presence of oxygen, the reaction may be stopped by preventing oxygen access and restarted at a later time.

EP 1 439 213 A1 discloses a composition containing a heat-generating substance generating heat upon reaction with oxygen, a carbon component, an oxidation promoter and water as well as a water separation-preventing stabilizer. This composition may be molded on base material etc.

US 4,268,272 A discloses an exothermic composition comprising a fibrous powder.

US 5,180,759 A and EP 0 244 133 A2 disclose an exothermic composition comprising a particulate readily oxidisable metal and an organic fluorine-containing compound which may be polytretrafluoroethylene, optionally filled with carbon. When the exothermic composition is used in the form of a preformed shape, it also contains one or more binders different from tetrafluoropolyethylene.

US 6,209,457 B1 discloses an exothermic composition material for controlled localized heating of a base material comprising an exothermic self-propagating high-temperature synthesis gasless combustion material mixture having a predetermined temperature of burning which may be selected from combinations of certain metals with carbon. Theses certain metals are Ti, Hf, Nb, Ta, and Zr.

Despite the advantages of oxygen-based heaters, there is still a need for improved oxygen- based heaters, as well as methods of manufacturing same.

### SUMMARY OF THE INVENTION

In one aspect of the invention, the invention relates to a precursor of a portable flameless heating apparatus, that can be comprised in a portable flameless heating apparatus, as defined in claim 1, the portable flameless heating apparatus comprising a flexible porous substrate formed into a desired shape, the substrate includes a reducing agent providing an exothermic reaction upon oxidation, a promoter for the reduction of oxygen, and a binding agent. Another aspect of the invention relates to a portable flameless heating apparatus as defined in claim 2 which will generate heat upon reaction with oxygen once electrolyte is added. Unlike the water-based heaters, the present heater takes advantage of the ambient oxygen present in the atmosphere. Thus, a user need not physically transfer or add a reagent to the portable flameless heating apparatus, as all of the required reactants are either present in the heater, or present in the atmosphere. This benefit, as well as others, will be readily apparent based upon the description of the preferred embodiments.

Yet another aspect of the invention relates to a method of manufacturing a portable flameless heating apparatus as defined in claim 9 generally comprises the steps of mixing a reducing agent, a promoter for reducing oxygen, and a binding agent to form a mixture. The mixture is then formed into a substrate with a desired shape, and, then stored in ambient or another oxygen- containing atmosphere. This aspect has substantial benefits in the manufacturing process. For example, the method allows a substrate to be produced and stored for a commercially acceptable period of time until the substrate is needed to produce a specific portable flameless heating apparatus configuration. Additionally, the desired shape of the substrate may initially be a stock shape sized for later reforming or dividing into smaller sizes as desired for use with differing applications. This too is believed to have substantial benefits for a manufacturing process such as, allowing multiple heater designs to be made from one stock material. Other benefits of this aspect of the invention will be appreciated and understood based upon the description of the preferred embodiments.

### DESCRIPTION OF THE DRAWINGS

FIG. 1 is a cutaway side view of a portable flameless heating apparatus according to the invention.
FIG. 2 is a perspective exploded view of a portable flameless heating apparatus according to the invention.
FIG. 3 is a flow chart of one embodiment of a method according to the present invention.
FIG. 4 is a graph of tests results of a sample of a portable flameless heating apparatus made according to the present invention.
FIG. 5 is a graph of tests results of another sample of a portable flameless heating apparatus made according to the present invention.
FIG. 6 is a partially exploded view of a portable flameless heating apparatus made according to the invention.
FIG. 7 is a graph of tests results of another sample of a portable flameless heating apparatus made according to the present invention.

### DETAILED DESCRIPTION OF EXEMPLARY EMBODIMENTS

While this invention is susceptible of embodiment in many different forms, there is shown in the drawings and will be described in detail, specific embodiments with the understanding that the present disclosure is to be considered as an exemplification of the principles of the invention and is not intended to limit the invention to the embodiments illustrated.

It should be understood that like or analogous elements and/or components, referred to herein, are identified throughout the drawings by like reference characters. In addition, it should be understood that the drawings are primarily symbolic and are only meant to aid in understanding the ideas and concepts disclosed.

### HEATER

In one aspect of the invention, a portable flameless heating apparatus comprises a flexible porous substrate formed into a desired shape, the substrate includes a reducing agent providing an exothermic reaction upon oxidation, a promoter for the reduction of oxygen, and a binding agent. The reducing agent is preferably selected from the group consisting essentially of: zinc, aluminum, or magnesium. The promoter is carbon and may or may not have addition chemicals or compositions added to it. At least during operation (versus storage), the substrate includes an electrolyte. The electrolyte is alkaline, preferably potassium hydroxide. The binding agent is preferably chosen to assist in providing porosity in the substrate and according to one aspect of the invention to also aid in allowing the substrate to be flexible. In a preferred embodiment, the binding agent is polytetrafluoroethylene which aids in providing both of these attributes. The polytetrafluoroethylene may be in the range of 1% to 40% of the total weight of the substrate. The binding agent may comprise a mixture of chemical compounds.

Forming a substrate with an integral shape, as opposed to simply providing a particulate mixture of the chemical constituents of the heater, provides the benefits accompanying the use of integral structures in product design, for example, structural integrity of the heater. The flexibility of the portable flameless heating apparatus supplies numerous benefits. For example, as a preformed stock material or packaged heater, a portable flameless heating apparatus may be bent, or displaced, to fit containers having varied shapes and dimensions.

When charged with an electrolyte, the portable flameless heating apparatus further comprises a container surrounding the porous substrate to segregate the substrate from an atmosphere outside of the container. In one embodiment, the container has at least one re-sealable opening to selectively permit ambient atmosphere to access the substrate for purposes of oxygen reaction with the substrate. A re-sealable opening may include (but certainly is not limited to): pressure sensitive adhesive, mechanical tongue-and-grove structure, elastic or twist locks, or any other structure that may selectively permit resealing the opening. In one embodiment it is also contemplated that the opening includes an oxygen-permeable barrier to cover the substrate when the opening is unsealed to maintain physical isolation or sequestration of the substrate within the container while permitting access to oxygen. Varying the permeability of the barrier may be used to control the rate of heat production. A barrier that allows a large flow of oxygen in will allow for a faster rate of reaction, and a barrier that lets a small amount of oxygen in will allow for a slower rate of reaction.

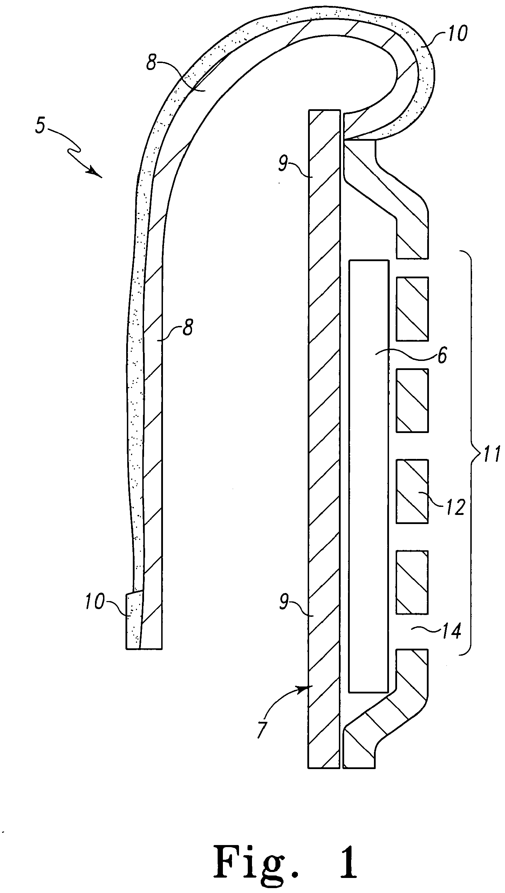

FIG. 1 discloses a portable flameless heating apparatus 5. The portable flameless heating apparatus 5 comprises a substrate 6 (in the form of a thick, or plate-like sheet) is surrounded (for segregation from the atmosphere) by a container 7 which has front flap 8 and a back flap 9 both of which are oxygen-impermeable (it is recognized that materials which have a relatively low level of oxygen-permeability may be used). The front flap 8 has a pressure sensitive adhesive 10 around a marginal edge perimeter thereof. The front flap 8 (when closed) segregates the substrate 6 from oxygen. The front flap 8 may be partially removed to expose an opening 11, which in turn exposes the substrate 6 to oxygen. Within the opening 11 there is an oxygen-permeable barrier 12. The oxygen-permeable barrier 12 secures the substrate 6 in the container 7. The oxygen-permeable barrier 12 has apertures 14 which allow oxygen to reach the substrate 6 of the portable flameless heating apparatus 5. Once the item to be heated has been heated to the desired temperature, the front flap 8 may be used to close the opening 11 and the pressure sensitive adhesive portion 10 may hold the front flap 8 in place while providing an air-occlusive seal. The reaction will stop producing heat once all of the oxygen within the container 7 has been reacted.

Since the reaction is oxygen based, the reaction can be stopped by closing the opening(s) and cutting off oxygen access. If not all of the reducing agent has reacted, the portable flameless heating apparatus, unlike water based heaters, may be restarted and used to subsequently heat the same or a second item.

In another embodiment, the portable flameless heating apparatus comprises a flexible porous substrate formed into a desired shape, the substrate including a reducing agent selected from the group consisting essentially of: zinc, aluminum, or magnesium providing an exothermic reaction upon oxidation, carbon as promoter for the reduction of oxygen, an alkaline electrolyte, and, a polytetrafluoroethylene binding agent, and, a container surrounding the substrate to segregate the substrate from an atmosphere outside of the container, the container having at least one re-sealable opening to selectively permit ambient atmosphere to access the substrate for purposes of oxygen reaction with the substrate.

It is further contemplated that the desired shape of a substrate may be formed to have a preformed contour substantially mating with a contour of a portion of the outer surface of a container (such as a container for containing a substance to be heated such as a comestible) required for the desired heat transfer from the apparatus to the contents of the container. By use of the term preformed, it is meant that the substrate, for example, may be molded, pressed into a mold or is wrapped around the outer surface of the container.

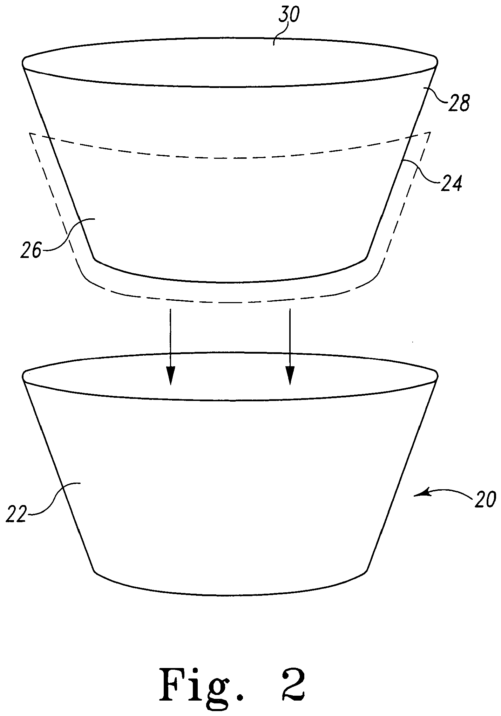

FIG. 2 discloses a portable flameless heating apparatus 20 which is preformed into a desired shape 22. The desired shape 22 mates with the contour 24 of a portion 26 of the outer surface 28 of a container 30 which may contain a comestible.

Another desired shape of a substrate is a stock shape sized for later reforming or dividing into smaller sizes as desired for use with differing applications. It is believed that any suitable method may be used to manufacture the stock shape, including, but not limited to, rolling, extruding, pressing, forming, stretching, etc.

The stock shape may be any shape, including, but not limited to, conventional sheet stock, rod stock, bar stock, and tube stock. Sheet stock may be a thick sheet, *e.g.* "plate," or it may be a thin sheet, *e.g.,* "film." Rod stock, too, may be a thick rod, or a thin rod, like a rope or a wire. Similarly, bar stock and tube stock may be thick or thin, depending on the desired application. Moreover, the stock material may be extruded cylinders, triangles, square tubes or any other shape. The stock material is sized for later reforming or dividing into smaller sizes for use or further reforming as desired for use with differing applications.

Utilizing thinner desired shapes and thinner stock shapes is believed to have additional benefits. For example, a thinner sheet may be wrapped around a container multiple times instead of using a single wrap with a thick stock. Similarly, a thinner rod or "wire" may also be wrapped around a container, *e.g*., wound. The thinner shapes are believed to have increased flexibility. Additionally, by utilizing thinner shapes, it is contemplated that the portable flameless heating apparatus may not need adhesive or other structure or composition to assist in keeping it disposed adjacent to the container or object to be heated.

### METHOD

Another aspect of the invention provides a novel method to construct a portable flameless heating apparatus.

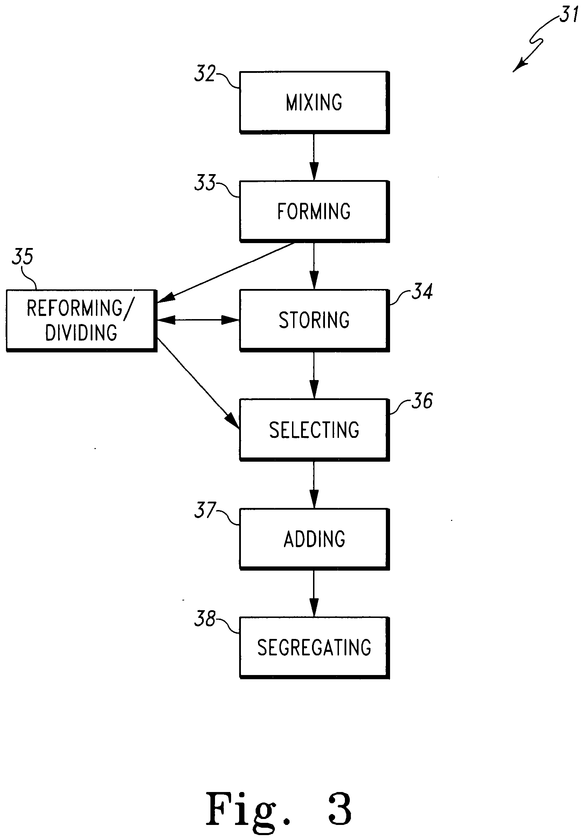

FIG. 3 discloses a preferred method 31 according to this aspect of the invention. The method comprises the steps of mixing (32) a reducing agent, a promoter for reducing oxygen, and a binding agent to form a mixture, forming (33) the mixture into a substrate with a desired shape, and, then storing (34) the substrate in ambient or other oxygen containing atmosphere. By storing it is meant that the substrate can be stored for a commercially acceptable period, or "shelf life," such that based upon the concentration, the porosity of the substrate, the chemicals comprising the substrate, and other factors, the substrate will still be able to produce the required heat when the substrate is integrated into an end use such as a heater. It is preferred that the desired shape is flexible.

In step (33) the desired shape of the substrate may be preformed into a contour substantially mating with a contour of a portion of an outer surface of a container for containing a comestible required for the desired heat transfer from the apparatus to the comestible e.g. see FIG. 2.

Alternately in the step (33), the desired shape of the substrate may be formed as a stock shape, as described above, which may include the later step (35) of reforming or dividing the stock material into smaller sizes substrates as desired for use with differing applications. The stock shape may be any shape, including, but not limited to, sheet stock, rod stock, bar stock, and tube stock. Sheet stock may be a thick sheet, *e.g.* "plate," or it may be a thin sheet, *e.g.,* "film." Rod stock, too, may be a thick rod, or a thin rod, like a wire. Similarly, bar stock and tube stock may be thick or thin, depending on the desired application. Moreover, the stock material may be extruded cylinders, triangles, square tubes or any other shape. The stock material is sized for later reforming or dividing into smaller sizes for use or further reforming as desired for use with differing applications. As noted above it is believed that the thinner desired shapes and thinner stock shapes may have additional benefits from thicker stock in terms of manufacturing and design flexibility and scalability.

The inventors of the present invention have determined that varying the concentration of the electrolytic solution can control the rate of the reaction. For example, if a desired application needs a faster more immediate need of heat (higher temperature or flux), as may be required for suitably heating a container of food in an acceptable time frame, then an electrolyte with a relatively higher concentration may be used. However, if a longer, more prolonged heat generation or lower temperature is required for the substance to be heated, then an electrolyte with a lower concentration may be used. Utilizing this aspect in the manufacturing process can have substantial benefits for scalability and reduced part count, as is true for the other aspects of the invention disclosed herein i.e. flexibility of the substrate, manufacturing stock shapes of the substrate, and manufacturing and storage of the substrate in ambient air. For example, selecting the concentration of the electrolyte after substrate manufacture, allows a manufacturer to mass-produce a stock material, which may be produced in an ambient atmosphere wherein oxygen is present, then, as the need arises, the stock material may be reformed or divided and then reformed into smaller portable substrates for various applications before the electrolyte is added. The electrolyte may then be selected and matched with substrates for further packaging for various differing applications.

Accordingly, as disclosed in FIG. 3 a method of manufacturing a portable flameless heating apparatus may further comprise the step (36) of selecting a desired rate of reaction as influenced by the electrolyte, and/or selecting an electrolytic solution to provide the selected rate of reaction, and, then provide the step (37) of adding the selected electrolytic solution to the substrate. In this way, the rate of reaction is controlled, at least in part by utilizing an appropriate electrolyte concentration. In addition, since the reaction is driven by oxygen, and will only begin once the electrolyte is added, the electrolyte may be added in an oxygen containing atmosphere. This may have additional benefits in the manufacturing process. For example, there would be no need to create an oxygen-free atmosphere for the manufacturing process. Sequestering or encasing the portable substrate such as in packaging, once the electrolyte has been added and the substrate has begun to generate heat, may be conducted in such a way as to permit only a negligible amount of reaction, such as by varying packaging time, amount of reagent used, etc. Once contained, the reaction will create a negative pressure (within the container), which advantageously will aid in initially drawing oxygen in as the heater is later put into use and exposed to oxygen by a user.

Accordingly, as disclosed in FIG. 3, a method of manufacturing may further comprise the step (38) of segregating, such as by surrounding the substrate in a container to segregate the substrate from an atmosphere outside of the container, wherein the container has at least one re-sealable opening to selectively permit ambient atmosphere to access the substrate for purposes of oxygen reaction with the substrate.

### EXAMPLES

The following examples disclose prototypical heaters and methods for making same according to the invention.

Three liters of de-ionized water were placed into a reaction vessel equipped with a stirring paddle. Then, 0.345 g of KMnO₄ was added to the water and stirred until dissolved. Subsequently, 40 g of acetylene carbon black were added to the water while slowly stirring the water, and the mixture was stirred for approximately 30 minutes. The mixture was then filtered through a filter funnel using a vacuum assist. The filtered carbon material was then placed in a drying container and dried at 95 °C.

Additionally, 1 g of In(OH)₃ and 1 g of In₂(SO₄)₃ were mixed with 200 ml of de-ionized water and stirred to form a suspension.

Then 100 g of zinc alloy, such as BI 100 230 d70 produced by Umicore, was placed in a mixing bowl. Thirty-eight milliliters of the saturated indium solution was added to the mixing bowl containing the zinc alloy and stirred for approximately 1 minute. The mixture was then allowed to rest for approximately 15 minutes. Eight grams of treated carbon were then added to the mixture and the mixture was stirred at medium speed for approximately 1 minute. The mixing bowl was scraped and then an additional 30 seconds of mixing was performed, followed by a scraping of the bowl.

Fifteen grams of polytetrafluoroethylene suspension was added to the mixture and mixed at low speed for 1 minute, followed by scraping and mixing for an additional 30 seconds. The mixture was then formed into a ball shape similar to a dough ball and removed for further processing.

The ball was formed into a rectangular shaped brick. The rectangular shape was then processed through a roll milling process to form thinner and thinner sheets stopping at a final desired thickness for the particular type of heater sheet. The sheet was then placed in an oven at 95 °C to dry. After removing the sheet from the oven the resulting heater sheet is porous, cohesive and flexible, and may be cut into any desired dimensions for the particular application.

It is believed that the dry non-activated heater sheets can be stored in normal atmospheric conditions indefinitely, for use later as a heater. Other suitable methods of constructing the heater may include similar methods of extruding, roll coating, casting, or pasting known to those of skill in the art.

A portable flameless heating apparatus, prepared as described above, was taken into an inert atmosphere glove box. The material was then wetted with a 9N KOH solution (approximately 37% by weight). Approximately 23% by weight of KOH was added to the portable flameless heating apparatus. After the solution had soaked into the pores of the sheet, the sheet was formed to the outside circumference of a metal soup can. This can was then placed inside a larger can with an outer wall that provided openings. This can assembly was then placed in a sealed oxygen impermeable membrane to prevent it from being exposed to oxygen. The assembly was then removed from the glove box. The assembly was removed from the plastic bag and approximately 290 milliliters of water to be heated was added to the inner soup can. Two thermocouples were placed inside the soup can and a lid placed over the can. An additional thermocouple was placed on the surface of the sheet heater material.

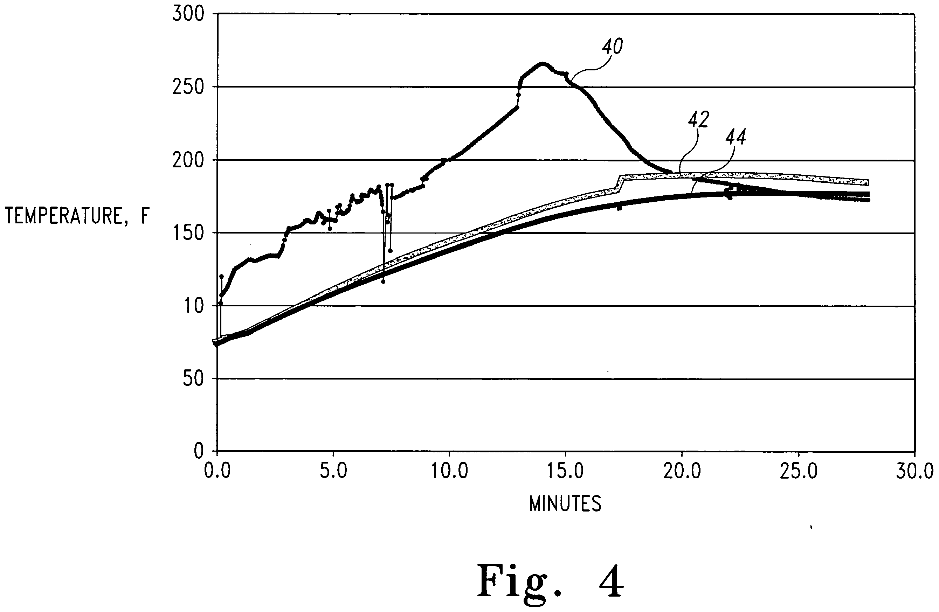

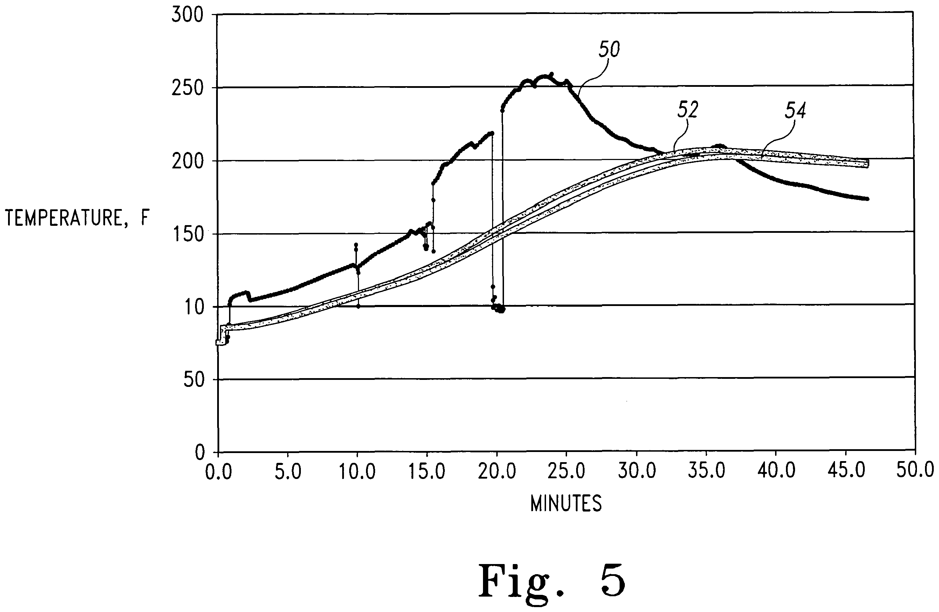

FIG. 4 discloses that the portable flameless heating apparatus began to generate heat immediately after being exposed to the air. The maximum temperature reached on the heater surface 40 was approximately 126.7 °C (260 °F). The water temperature 42, 44 inside the soup can was raised to 88.3 °C (191 °F) from a starting temperature of 21.2 °C (70 °F). FIG. 5 discloses a second sample, wherein the heater surface 50 temperature was measured and the water temperature 52, 54 was raised to 93.3 °C (201 °F).

A third example of a portable flameless heating apparatus was prepared as described above and utilized to heat water in a flexible pouch similar to an MRE pouch. The portable flameless heating apparatus was placed on the outside surfaces of the pouch and sealed from the air. Inside the pouch on each side, directly opposite the portable flameless heating apparatus was an absorbent material that was wetted with water. The pouch was removed from the inert atmosphere. A water filled MRE pouch was placed inside the heater pouch. The water filled pouch was monitored with a thermocouple to determine the temperature change of the water over time. The portable flameless heating apparatus was then exposed to the air by removing the seals and allowing oxygen in the surrounding air, access to the heater. The portable flameless heating apparatus began to heat up and generated enough heat to raise the water temperature to 76.7 °C (170 °F) within approximately 9 minutes.

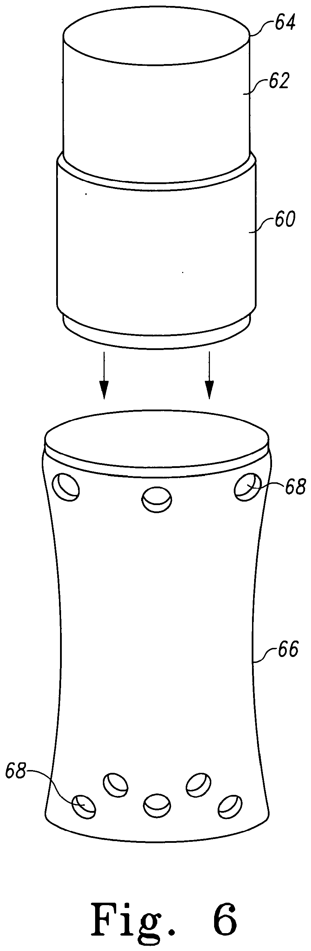

A fourth example was also tested. FIG. 6 discloses a single sheet shaped substrate 60, made by the method described herein, weighing approximately 56.7 grams was attached to the peripheral wall 62 of a metallic can 64 using an adhesive. The can 64 was capable of containing 6.5 ounces (190 ml) of fluid. After attaching the substrate 60 to the peripheral wall 62, the can 64 and outer container 66 were taken into an inert atmosphere glove box. The substrate 60 was then treated with a 50% by weight solution of KOH. Approximately 11.3 grams of solution was coated on the sheet and allowed to absorb into the sheet 60.

After the wetting and absorption process was complete the can 64 with attached portable flameless heating apparatus 60 was placed inside the outer container 66. The outer container 66 had openings 68. The entire assembly was then placed in an oxygen impermeable container and removed from the inert atmosphere glove box.

The assembly was then removed from the oxygen impermeable container and 190 ml of water was quickly added to the can 64. A thermocouple was placed in the middle of the inner can to monitor the temperature of the water. An additional thermocouple was attached to the portable flameless heating apparatus 60 to monitor the exterior surface temperature of the heater. The temperature rise was monitored and recorded.

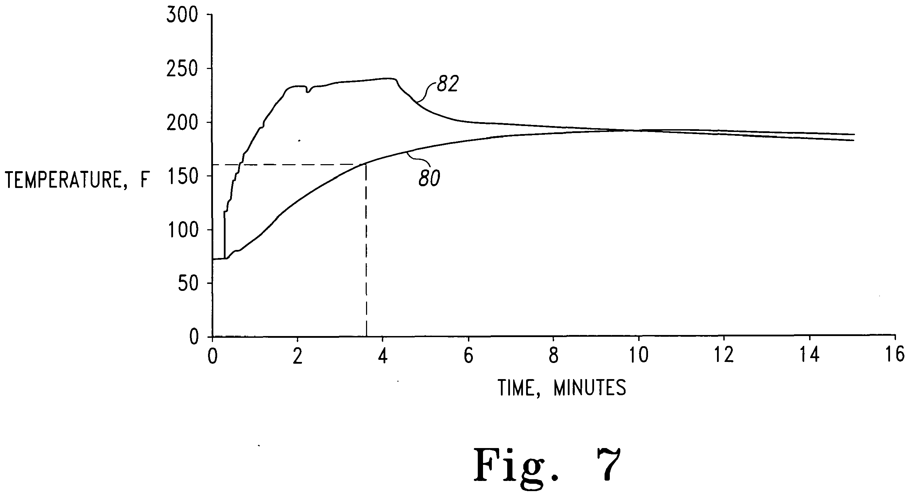

As disclosed in FIG. 7, the water temperature 80 and portable flameless heating apparatus temperature 82 started at approximately 23.3 °C (74 °F). The portable flameless heating apparatus temperature 82 rose rapidly reaching over 112.8 °C (235 °F) in less than two minutes. The water temperature 80 rose more slowly reaching 71.1 °C (160 °F) in 3.6 minutes. The water temperature 80 reached a maximum of 86.7 °C (188 °F) in 10.8 minutes and remained above 82.2 °C (180 °F) until the test was stopped at 15 minutes.

The foregoing description merely explains and illustrates the invention and the invention is not limited thereto. The appended claims set forth the scope of the invention. Those skilled in the art that have the disclosure before them will be able to make modifications without departing from the scope of the invention.

## Claims

1. A precursor of a portable flameless storage heating apparatus capable of being stored in an oxygen-containing atmosphere and consisting of a flexible porous substrate made by mixing the following components:
- a reducing agent providing an exothermic reaction upon oxidation and selected from the group consisting of: zinc, aluminum, and magnesium,
- a promoter for the reduction of oxygen comprising carbon, and
- a binding agent which is polytetrafluoroethylene;
and forming the mixture into a desired shape.

2. A portable flameless heating apparatus comprising:
the precursor of portable flameless storage heating apparatus of claim 1 wetted with an alkaline electrolytic solution having a selected concentration so as to control the rate of the exothermic reaction of the reducing agent, and
a container surrounding the porous substrate to segregate the substrate from an atmosphere outside of the container, the container having at least one re-sealable opening to selectively permit ambient atmosphere to access the substrate for purposes of oxygen reaction with the substrate.

3. The portable flameless heating apparatus of claim 2 wherein the opening includes an oxygen permeable barrier.

4. The portable flameless heating apparatus of claim 2 or 3 wherein the alkaline electrolyte present in the flexible porous substrate forming the precursor of the portable flameless storage heating apparatus after wetting is potassium hydroxide.

5. The precursor of the portable flameless heating apparatus of claim 1 or the portable flameless heating apparatus of any one of claims 2 to 4 wherein the desired shape of the substrate is a preformed contour substantially mating with a contour of that portion of the outer surface of a container for containing a comestible required for the desired heat transfer from the apparatus to the comestible.

6. The precursor of the portable flameless heating apparatus of claim 1 wherein the desired shape of the substrate is a stock shape sized for later reforming or dividing into smaller sizes as desired for use with differing applications.

7. The portable flameless heating apparatus of any one of claims 2 to 5 wherein the desired shape of the substrate is a stock shape sized for later reforming or dividing into smaller sizes as desired for use with differing applications.

8. The portable flameless heating apparatus of claim 7 wherein the stock shape is selected from the group consisting essentially of sheet stock, rod stock, bar stock, tube stock.

9. A method of manufacturing a portable flameless heating apparatus of any one of claims 2 to 5 and 7 to 8 comprising the steps of:
a) mixing a reducing agent providing an exothermic reaction upon oxidation and selected from the group consisting of: zinc, aluminium, and magnesium, a promoter for the reduction of oxygen comprising carbon, and a binding agent which is polytetrafluoroethylene; and forming the mixture into a substrate with a desired shape, thus providing precursor of a portable flameless heating apparatus as claimed in claim 1;
b) surrounding the precursor of a portable flameless heating apparatus in a container to segregate the substrate from an atmosphere outside of the container, the container having at least one re-sealable opening to selectively permit ambient atmosphere to access the substrate for purposes of oxygen reaction with the substrate,
c) selecting a desired rate of reaction;
d) selecting an alkaline electrolytic solution to provide the selected rate of reaction;
e) then storing the substrate in ambient or other oxygen containing atmosphere and adding the selected electrolytic solution to the substrate.

10. The method of manufacturing a portable flameless heating apparatus of claim 9 wherein the desired shape of the substrate is a stock shape sized for later reforming or dividing into smaller sizes as desired for use with differing applications.

11. The method of claim 10 wherein the stock shape is selected from the group consisting essentially of sheet stock, rod stock, bar stock, tube stock.

12. The method of manufacturing a portable flameless heating apparatus of claim 10 or 11 further comprising the step of dividing the stock substrate into smaller substrate shapes as desired for further reforming or packaging.

13. The method of manufacturing a portable flameless heating apparatus of claim 9 wherein the desired shape of the substrate is a preformed contour substantially mating with a contour of that portion of the outer surface of a container for containing a comestible required for the desired heat transfer from the apparatus to the comestible.

## Patentansprüche

1. Vorläufer für eine tragbare flammenlose Speicherheizeinrichtung, der dazu fähig ist, in einer sauerstoffhaltigen Atmosphäre aufbewahrt zu werden und aus einem flexiblen porösen Substrat besteht, das dadurch hergestellt wird, dass die folgenden Komponenten gemischt werden:
- ein Reduktionsmittel, das beim Oxidieren eine exotherme Reaktion bereitstellt und aus der Gruppe ausgewählt ist, die aus Zink, Aluminium und Magnesium besteht,
- ein Beschleuniger für die Reduktion von Sauerstoff, der Kohlenstoff umfasst, und
- ein Bindemittel, das Polytetrafluorethylen ist;
und die Mischung in eine gewünschte Form gebracht wird.

2. Tragbare flammenlose Heizeinrichtung, umfassend:
den Vorläufer für eine tragbare flammenlose Speicherheizeinrichtung gemäß Anspruch 1, der mit einer alkalischen Elektrolytlösung benetzt ist, die eine ausgewählte Konzentration hat, um so die Rate der exothermen Reaktion des Reduktionsmittels zu steuern, und
einen Behälter, der das poröse Substrat umgibt, um das Substrat von einer Atmosphäre außerhalb des Behälters getrennt zu halten, wobei der Behälter mindestens eine wiederverschließbare Öffnung hat, um selektiv zu gestatten, dass umgebende Atmosphäre für die Zwecke der Sauerstoffreaktion mit dem Substrat zu dem Substrat gelangt.

3. Tragbare flammenlose Heizeinrichtung gemäß Anspruch 2, wobei die Öffnung eine sauerstoffdurchlässige Barriere aufweist.

4. Tragbare flammenlose Heizeinrichtung gemäß Anspruch 2 oder 3, wobei der alkalische Elektrolyt, der in dem flexiblen porösen Substrat, das den Vorläufer für die tragbare flammenlose Speicherheizeinrichtung bildet, nach dem Benetzen vorhanden ist, Kaliumhydroxid ist.

5. Vorläufer für eine tragbare flammenlose Heizeinrichtung gemäß Anspruch 1 oder tragbare flammenlose Heizeinrichtung gemäß einem der Ansprüche 2 bis 4, wobei die gewünschte Form des Substrats eine vorgeformte Kontur ist, die im Wesentlichen mit einer Kontur desjenigen Teils der Außenoberfläche eines Behälters zum Enthalten eines Nahrungsmittels zusammenpasst, der für die gewünschte Wärmeübertragung von der Vorrichtung zum Nahrungsmittel nötig ist.

6. Vorläufer für eine tragbare flammenlose Heizeinrichtung gemäß Anspruch 1, wobei die gewünschte Form des Substrats eine Bevorratungsform ist, die für eine spätere Umformung oder Aufteilung in kleinere Größen nach Wunsch zur Verwendung mit unterschiedlichen Anwendungen dimensioniert ist.

7. Tragbare flammenlose Heizeinrichtung gemäß einem der Ansprüche 2 bis 5, wobei die gewünschte Form des Substrats eine Bevorratungsform ist, die für eine spätere Umformung oder Aufteilung in kleinere Größen nach Wunsch zur Verwendung mit unterschiedlichen Anwendungen dimensioniert ist.

8. Tragbare flammenlose Heizeinrichtung gemäß Anspruch 7, wobei die Bevorratungsform aus der Gruppe ausgewählt ist, die im Wesentlichen aus Flachbahnvorrat, Stangenvorrat, Stabvorrat, Rohrvorrat besteht.

9. Verfahren zum Herstellen einer tragbaren flammenlosen Heizeinrichtung gemäß einem der Ansprüche 2 bis 5 und 7 bis 8, umfassend die folgenden Schritte:
a) Mischen eines Reduktionsmittels, das beim Oxidieren eine exotherme Reaktion bereitstellt und aus der Gruppe ausgewählt ist, die aus Zink, Aluminium und Magnesium besteht, eines Beschleunigers für die Reduktion von Sauerstoff, der Kohlenstoff umfasst, und eines Bindemittels, das Polytetrafluorethylen ist; und Formen der Mischung in ein Substrat mit einer gewünschten Form, um so einen Vorläufer für eine tragbare flammenlose Heizeinrichtung gemäß Anspruch 1 bereitzustellen;
b) Umgeben des Vorläufers für eine tragbare flammenlose Heizeinrichtung mit einem Behälter zum Abtrennen des Substrats von einer Atmosphäre außerhalb des Behälters, wobei der Behälter mindestens eine wiederverschließbare Öffnung hat, um selektiv zu gestatten, dass umgebende Atmosphäre für die Zwecke der Sauerstoffreaktion mit dem Substrat zu dem Substrat gelangt,
c) Auswählen einer gewünschten Reaktionsrate;
d) Auswählen einer alkalischen Elektrolytlösung zum Bereitstellen der ausgewählten Reaktionsrate;
e) dann Speichern des Substrats in einer Umgebungs- oder sauerstoffhaltigen Atmosphäre und Hinzufügen der ausgewählten Elektrolytlösung zum Substrat.

10. Verfahren zum Herstellen einer tragbaren flammenlosen Heizeinrichtung gemäß Anspruch 9, wobei die gewünschte Form des Substrats eine Bevorratungsform ist, die für eine spätere Umformung oder Aufteilung in kleinere Größen nach Wunsch zur Verwendung mit unterschiedlichen Anwendungen dimensioniert ist.

11. Verfahren gemäß Anspruch 10, wobei die Bevorratungsform aus der Gruppe ausgewählt ist, die im Wesentlichen aus Flachbahnvorrat, Stangenvorrat, Stabvorrat, Rohrvorrat besteht.

12. Verfahren zum Herstellen einer tragbaren flammenlosen Heizeinrichtung gemäß Anspruch 10 oder 11, ferner umfassend den Schritt zum Aufteilen des Bevorratungssubstrats in kleinere Substratformen nach Wunsch zur weiteren Umformung oder Verpackung.

13. Verfahren zum Herstellen einer tragbaren flammenlosen Heizeinrichtung gemäß Anspruch 9, wobei die gewünschte Form des Substrats eine vorgeformte Kontur ist, die im Wesentlichen mit einer Kontur desjenigen Teils der Außenoberfläche eines Behälters zum Enthalten eines Nahrungsmittels zusammenpasst, der für die gewünschte Wärmeübertragung von der Vorrichtung zum Nahrungsmittel nötig ist.

## Revendications

1. Précurseur d'un appareil de chauffage à accumulation sans flamme portable capable d'être stocké dans une atmosphère contenant de l'oxygène et constitué d'un substrat poreux flexible obtenu en mélangeant les composants suivants :
- un agent réducteur produisant une réaction exothermique en s'oxydant et sélectionné dans le groupe constitué de : zinc, aluminium et magnésium,
- un promoteur pour la réduction d'oxygène comprenant du carbone, et
- un agent liant qui est du polytétrafluoroéthylène ;
et en donnant au mélange une forme désirée.

2. Appareil de chauffage sans flamme portable comprenant :
le précurseur d'un appareil de chauffage à accumulation sans flamme portable selon la revendication 1 mouillé avec une solution électrolytique alcaline ayant une concentration sélectionnée pour commander la vitesse de la réaction exothermique de l'agent réducteur, et
un récipient entourant le substrat poreux pour isoler le substrat d'une atmosphère extérieure au récipient, le récipient ayant au moins une ouverture refermable pour permettre sélectivement à l'atmosphère ambiante d'accéder au substrat afin que l'oxygène réagisse avec le substrat.

3. Appareil de chauffage sans flamme portable selon la revendication 2, dans lequel l'ouverture comprend une barrière perméable à l'oxygène.

4. Appareil de chauffage sans flamme portable selon la revendication 2 ou 3, dans lequel l'électrolyte alcalin présent dans le substrat poreux flexible formant le précurseur de l'appareil de chauffage à accumulation sans flamme portable après mouillage est de l'hydroxyde de potassium.

5. Précurseur de l'appareil de chauffage sans flamme portable selon la revendication 1 ou appareil de chauffage sans flamme portable selon l'une quelconque des revendications 2 à 4, dans lequel la forme désirée du substrat est un contour préformé correspondant sensiblement à un contour de la partie de la surface extérieure d'un récipient destiné à contenir un produit comestible qui est nécessaire pour le transfert de chaleur désiré de l'appareil au produit comestible.

6. Précurseur de l'appareil de chauffage sans flamme portable selon la revendication 1, dans lequel la forme désirée du substrat est une forme de stock dimensionnée pour un reformage ou une division ultérieure en dimensions plus petites comme désiré pour une utilisation avec des applications différentes.

7. Appareil de chauffage sans flamme portable selon l'une quelconque des revendications 2 à 5, dans lequel la forme désirée du substrat est une forme de stock dimensionnée pour un reformage ou une division ultérieure en dimensions plus petites comme désiré pour une utilisation avec des applications différentes.

8. Appareil de chauffage sans flamme portable selon la revendication 7, dans lequel la forme de stock est sélectionnée dans le groupe constitué essentiellement d'un stock de feuilles, d'un stock de tiges, d'un stock de barres, d'un stock de tubes.

9. Procédé de fabrication d'un appareil de chauffage sans flamme portable selon l'une quelconque des revendications 2 à 5 et 7 à 8, comprenant les étapes consistant à :
a) mélanger un agent réducteur produisant une réaction exothermique en s'oxydant et sélectionné dans le groupe constitué de : zinc, aluminium et magnésium, un promoteur pour la réduction d'oxygène comprenant du carbone et un agent liant qui est du polytétrafluoroéthylène ; et à donner au mélange une forme désirée, fournissant ainsi le précurseur d'un appareil de chauffage sans flamme portable selon la revendication 1 ;
b) entourer le précurseur d'un appareil de chauffage sans flamme portable d'un récipient pour isoler le substrat d'une atmosphère extérieure au récipient, le récipient ayant au moins une ouverture refermable pour permettre sélectivement à l'atmosphère ambiante d'accéder au substrat afin que l'oxygène réagisse avec le substrat,
c) sélectionner une vitesse de réaction désirée ;
d) sélectionner une solution électrolytique alcaline pour produire la vitesse de réaction sélectionnée ;
e) puis stocker le substrat dans une atmosphère ambiante ou une autre atmosphère contenant de l'oxygène et ajouter la solution électrolytique sélectionnée au substrat.

10. Procédé de fabrication d'un appareil de chauffage sans flamme portable selon la revendication 9, selon lequel la forme désirée du substrat est une forme de stock dimensionnée pour un reformage ou une division ultérieure en dimensions plus petites comme désiré pour une utilisation avec des applications différentes.

11. Procédé selon la revendication 10, selon lequel la forme de stock est sélectionnée dans le groupe constitué essentiellement d'un stock de feuilles, d'un stock de tiges, d'un stock de barres, d'un stock de tubes.

12. Procédé de fabrication d'un appareil de chauffage sans flamme portable selon la revendication 10 ou 11, comprenant en outre l'étape consistant à diviser le substrat de stock en forme de substrat plus petites comme désiré pour un reformage ou un conditionnement ultérieur.

13. Procédé de fabrication d'un appareil de chauffage sans flamme portable selon la revendication 9, selon lequel la forme désirée du substrat est un contour préformé correspondant sensiblement à un contour de la partie de la surface extérieure d'un récipient destiné à contenir un produit comestible qui est nécessaire pour le transfert de chaleur désiré de l'appareil au produit comestible.
